# EUROPÄISCHE PATENTSCHRIFT

(11) **EP 1 439 986 B1**
(45) Veröffentlichungstag und Bekanntmachung des Hinweises auf die Patenterteilung: **06.04.2005**
(21) Anmeldenummer: 02774520.7
(22) Anmeldetag: 16.08.2002
(51) Int. Cl.: B60R 21/045, B60R 21/20, B60H 1/00

(54) **FAHRZEUGBELÜFTUNGSVORRICHTUNG, INSBESONDERE FÜR EIN KRAFTFAHRZEUG**
VEHICLE VENTILATION DEVICE, IN PARTICULAR FOR A MOTOR VEHICLE
DISPOSITIF DE VENTILATION POUR UN VEHICULE, EN PARTICULIER UN VEHICULE AUTOMOBILE

(30) Priorität: 17.10.2001 DE 10150660; 21.12.2001 DE 10163685
(43) Veröffentlichungstag der Anmeldung: 28.07.2004
(73) Patentinhaber: Volkswagen AG, 38436 Wolfsburg (DE)
(72) Erfinder: DIETZE, Holger, 38162 Cremlingen (DE); KESSLER, Jörn, 27607 Langen (DE); STEENBOCK, Michael, 22301 Hamburg (DE); DAHMEN, Peter, 38126 Braunschweig (DE)
(74) Vertreter: Liebl, Thomas, Dipl.-Ing.
(86) Internationale Anmeldenummer: PCT/EP2002/009192
(87) Internationale Veröffentlichungsnummer: WO 2003/033310

(56) Entgegenhaltungen:
- EP-A- 0 456 531
- EP-A- 0 919 421
- EP-A- 1 072 483
- WO-A-01/07283
- WO-A-98/34806
- DE-A- 3 806 783
- DE-A- 19 851 545
- DE-U- 20 007 819
- FR-A- 2 799 413
- US-A- 3 817 552
- US-A- 3 922 429
- US-A- 5 087 067
- US-A- 5 209 519
- US-A- 5 524 923
- US-A- 5 533 747
- US-A- 5 709 601
- US-A- 5 868 423
- US-B1- 6 250 678
- HINCH J ET AL: "Air Bag Technology in Light Passenger Vehicles" XP002218836 das ganze Dokument

## Beschreibung

Die Erfindung betrifft eine Belüftungsvorrichtung für ein Fahrzeug, insbesondere für ein Kraftfahrzeug, nach dem Oberbegriff des Anspruchs 1.

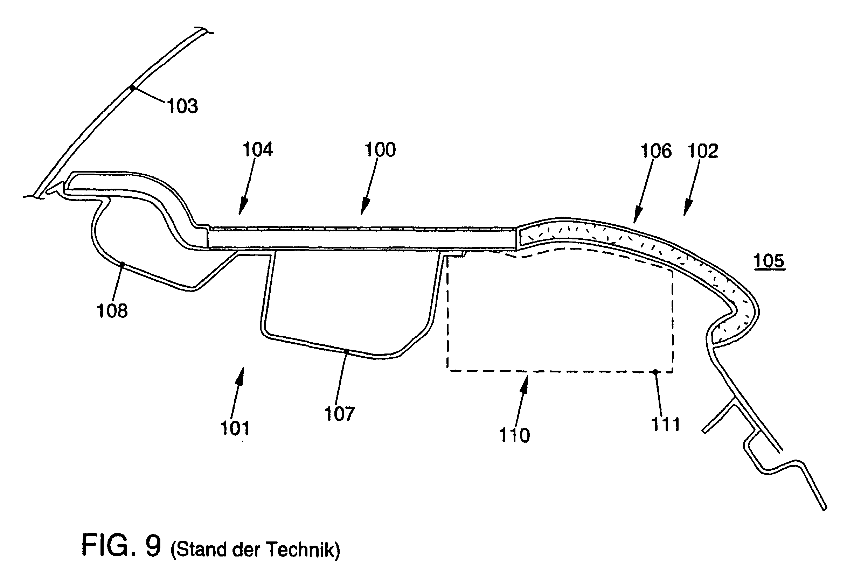

Eine bekannte Belüftungsvorrichtung für ein Kraftfahrzeug ist allgemein bekannt und schematisch in den Figuren 9 bis 11 dargestellt, wobei die Figur 9 einen Querschnitt durch eine Instrumententafel 100 der Belüftungsvorrichtung 101 zeigt, die im Beifahrerbereich 102 einen einer Windschutzscheibe 103 zugeordneten vorderen Instrumententafelwandbereich 104 und einen sich im Querschnitt durch die Instrumententafel 100 gesehen von der Windschutzscheibe 103 weg in Richtung Fahrzeuginnenraum 105 an den vorderen Instrumententafelwandbereich 104 hin anschließenden hinteren Instrumententafelwandbereich 106 als potentiellen Kopfaufprall-Instrumententafelwandbereich aufweist. Die Belüftungsvorrichtung 101 weist weiter einen mit einer hier nicht dargestellten Luftversorgungseinrichtung gekoppelten Personenausströmer-Luftzufuhrkanal 107 zur Luftzuführung zu im tnstrumententafelwandbereich angeordneten Personenausströmerdüsen auf, die hier ebenfalls nicht dargestellt sind, wobei der Personenausströmer-Luftzufuhrkanal von der Instrumententafel 100 überdeckt ist.

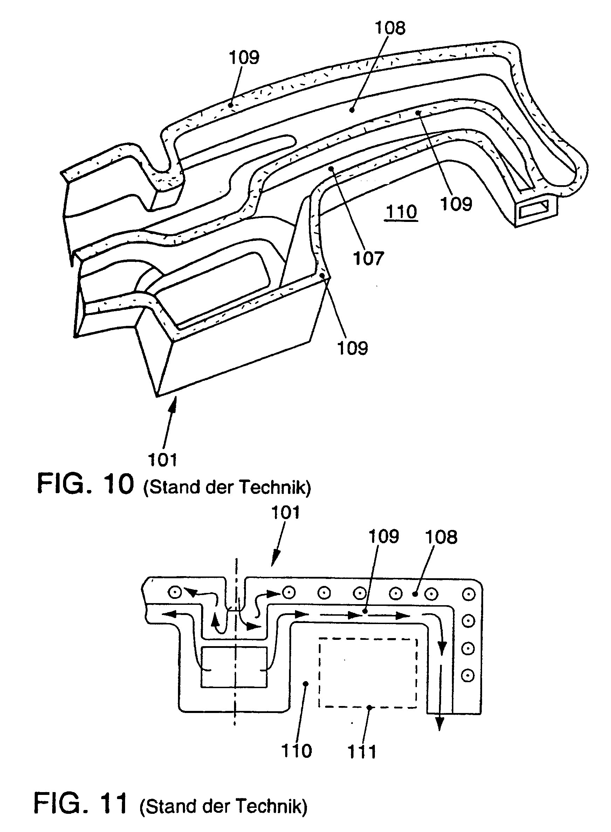

Wie dies der Figur 9 weiter entnommen werden kann, ist in Fahrzeuglängsachsenrichtung gesehen vor dem Personenausströmer-Luftzufuhrkanal 107 ein mit einer hier nicht dargestellten Defroster-Luftversorgungseinrichtung gekoppelter Defroster-Luftkanal 108 vorgesehen, der unterhalb des vorderen Instrumententafelwandbereichs 104 vorgesehen ist und im wesentlichen entlang des unteren Windschutzscheibenrandbereichs verläuft, wobei im vorderen Instrumententafelwandbereich 104 hier nicht dargestellte Defrosterdüsen vorhanden sind zur Zuführung der Luft vom Defroster-Luftkanal zur Windschutzscheibe 103. Insbesondere der Figur 10 kann entnommen werden, dass der Personenausströmer-Luftzufuhrkanal 107 und der Defroster-Luftkanal 108 einstückig miteinander verbunden und über flächige Schweißverbindungsflächen 109 an einer Instrumententafelunterseite festgelegt sind. In der Fig. 11 ist eine Draufsicht auf den Personenausströmer-Luftzufuhrkanal 107 und den Defroster-Luftkanal 108 gezeigt.

Wie dies den Fig. 9 bis 11 weiter entnommen werden kann, ist ein in der Fig. 11 lediglich strichliert eingezeichnetes Airbagmodul 111, bestehend aus einem mitsamt zugeordnetem Gasgenerator in einem Airbaggehäuse aufgenommenen Airbag, unterhalb des potentiellen Kopfaufprall-Instrumententafelwandbereichs 106 angeordnet, um den Airbag unmittelbar und schnell im Beifahrerbereich vor dem sich in einer normalen Sitzposition befindlichen Beifahrer aufblasen zu können. Aufgrund dieser Anordnung des Airbags im hinteren Instrumententafelbereich 106 wird der Airbag hier somit sofort nach seiner Aktivierung unmittelbar im Aufblasbereich mit hohem Fülldruck von z.B. ca. 30 bar vor dem Beifahrer aufgeblasen. Problematisch ist ein derartiger Aufbau insbesondere in Verbindung mit sich nicht in einer normalen Sitzposition (out-of-position) befindlichen Fahrzeuginsassen, z.B. Kindern, die im Beifahrerbereich unmittelbar hinter der Instrumententafel stehen, oder aber auch Kindern und Erwachsenen, die sich z.B. in einer mit dem Kopf in Richtung Instrumententafel nach vorne gebeugten oder geneigten Haltung befinden und/oder ggfs. nicht vorschriftsmäßig angegurtet sind. In einem solchen Fall besteht die Gefahr, dass die Fahrzeuginsassen im Falle eines Unfalls mit dem Kopf auf diesen hinteren, dem Beifahrer zugewandten Instrumententafelbereich noch vor der Aktivierung des Airbags als Primäraufprallschutz aufprallen oder sich zumindest in Richtung auf diesen potentiellen Kopfaufprallbereich zu bewegen, was bei einer gleichzeitig stattfindenden Airbagaktivierung zu einer Beeinträchtigungsgefahr für die Fahrzeuginsassen führt, da zum einen der Airbag hier aufgrund des sehr hohen anfänglichen Fülldrucks mit maximaler Airbagaggressivität in Richtung auf den Fahrzeuginsassen bzw. dessen Kopfbereich zu aufgeblasen wird und andererseits ein Kopfaufprall hier relativ hart ist, da der Kopfaufprall-Instrumentenwandbereich unmittelbar nach einem Aufprall des Fahrzeuginsassen sofort auf Block am Airbaggehäuse des Airbagmoduls geht.

Der Personenausströmer-Luftzufuhrkanal 107 ist hier U-förmig um das Airbagmodul 111 herum angeordnet, um diesen zu den randseitigen Personenausströmem zu führen. Dies ist umständlich und kann unter Umständen zu unerwünscheten Strömungsverlusten bezüglich der Ausströmleistung führen. Andereseits erfordert dies auch einen hohen Materialaufwand bei der Herstellung der Personenausströmer-Luftzufuhrkanäle.

Aus der US 5,087,067 ist eine gattungsgemäße Belüftungsvorrichtung für ein Fahrzeug, insbesondere für ein Kraftfahrzeug, bekannt mit einer Instrumententafel, die im Beifahrerbereich einen einer Windschutzscheibe zugeordneten vorderen Instrumententafelwandbereich und einen sich im Querschnitt durch die Instrumententafel gesehen von der Windschutzscheibe weg in Richtung Fahrzeuginnenraum an den vorderen Instrumententafelwandbereich hin anschließenden, einem Beifahrer zugeordneten, hinteren Instrumententafelwandbereich als potentiellen Kopfaufprall-Instrumententafelwandbereich aufweist. Zudem ist ein mit einer Luftversorgungseinrichtung gekoppelter Personenausströmer-Luftzufuhrkanal zur Luftzuführung zu im Instrumententafelwandbereich angeordneten Personenausströmerdüsen vorgesehen, wobei der Personenausströmer-Luftzufuhrkanal von der Instrumententafel überdeckt ist. Ein Airbagmodul, das wenigstens einen Airbag und wenigstens einen Gasgenerator aufweist, die in einem Airbaggehäuse aufgenommen sind, ist im montierten Zustand von der Instrumententafel überdeckt. Der Personenausströmer-Luftzufuhrkanal verläuft dabei im Beifahrerbereich unterhalb des potentiellen Kopfaufprall-Instrumententafelwandbereichs und erstreckt sich dort im wesentlichen in Fahrzeugquerachsenrichtung. Das Airbagmodul ist im Beifahrerbereich in Fahrzeuglängsachsenrichtung gesehen in einem Freiraum vor dem Personenausströmer-Luftzufuhrkanal angeordnet und damit im wesentlichen außerhalb des potentiellen Kopfaufprall-Instrumententafelwandbereichs, dem vorderen Instrumententafelwandbereich zugeordnet, angeordnet. Mit diesem Aufbau der Instrumententafel wird somit erreicht, dass das Airbagmodul außerhalb des potentiellen Kopfaufprall-Instrumententafelwandbereichs angeordnet ist.

Ferner ist es z.B. aus der DE 200 07 819 U1, DE 198 07 259 A1, DE 195 08 983 C1, EP 0 713 792 A1, DE 43 38 099 A1, DE 44 18 583 C2 und DE 197 20 384 C1 bekannt, den vorderen Instrumententafelwandbereich mit einer Vielzahl von ein bestimmtes Perforationsmuster bildenden Luftdurchtrittsöffnungen auszubilden, um im Fahrzeuginnenraum eine diffuse Belüftung in diesem Bereich zu erhalten. Bei einer derartigen Ausgestaltung des Instrumententafelwandbereichs wird die Luftaustrittsgeschwindigkeit im Bereich der Luftdurchtrittsöffnungen im Gegensatz zu herkömmlichen Ausströmdüsen erheblich reduziert, so dass es zu keiner von den Fahrzeuginsassen als unangenehm empfundenen, zugigen Belüftung aufgrund von hohen Luftausströmgeschwindigkeiten kommt. Mit einer derartigen diffusen Belüftung kann somit für die Fahrzeuginsassen ein angenehmes Raumklima geschaffen werden, in dem der Fahrzeuginnenraum sanft mit Frischluft versorgt wird. Zudem kann mit einer derartigen diffusen Belüftung der Geräuschpegel im Fahrzeuginnenraum erheblich reduziert werden, da die Luft hier nicht mehr mit einer den hohen Geräuschpegel verursachenden hohen Geschwindigkeit, wie dies bei herkömmlichen Ausströmdüsen der Fall ist, in den Fahrzeuginnenraum einströmt. Zugleich kann mit einer derartigen diffusen Belüftung des Oberseitenbereichs einer Instrumententafel auch gleichzeitig die Wärmeabstrahlung der Instrumententafel in Folge von Sonneneinstrahlung erheblich reduziert werden.

Aufgabe der Erfindung ist es, eine Belüftungsvorrichtung für ein Fahrzeug, insbesondere für ein Kraftfahrzeug, zu schaffen, die einfach aufgebaut ist und bei der bei einfacher Bedienung eine optimale Luftzufuhr für den Fahrzeuginnenraum möglich ist.

Diese Aufgabe wird gelöst mit den Merkmalen des Anspruchs 1.

Gemäß Anspruch 1 weist der der Windschutzscheibe zugewandte vordere Instrumententafelwandbereich wenigstens bereichsweise Luftdurchtrittsöffnungen zur diffusen Belüftung des Fahrzeuginnenraums auf. Vom Personenausströmer-Luftzufuhrkanal ausgehend ist wenigstens ein Stichkanal in den Bereich unterhalb der Luftdurchtrittsöffnungen geführt.

Somit kann der Personenausströmer-Luftzufuhrkanal vorteilhaft zur Luftzuführung zu den im Instrumententafelwandbereich angeordneten Personenausströmerdüsen als auch in einer Doppelfunktion zur einfachen und funktionssicheren Luftzuführung mittels dem wenigstens einen Stichkanal, der vom Personenausströmer-Luftzufuhrkanal ausgeht, zu den im vorderen Instrumententafelwandbereich wenigstens bereichsweise angeordneten Luftdurchtrittsöffnungen für eine diffuse Belüftung des Fahrzeuginnenraums verwendet werden. Dadurch ist ein einfacher Aufbau der Belüftungsvorrichtung geschaffen, da keine separate Kanalführung mit gegebenenfalls extra Bedienfeld zur Luftzuführung zu den Luftdurchtrittsöffnungen notwendig ist. Somit wird insgesamt gesehen ein kompakter, materialsparender Aufbau der Belüftungsvorrichtung möglich, der relativ kostengünstig hergestellt werden kann.

Zudem können bei diesem Luftkanalkonzept, bei dem der Personenausströmer-Luftzufuhrkanal im Bereich unterhalb des potentiellen Kopfaufprall-Instrumententafelwandbereichs verläuft, aufprallharte Bauteile, wie z.B. insbesondere ein Airbagmodul, das wenigstens einen Airbag und wenigstens einen Gasgenerator aufweist, die in einem Airbaggehäuse aufgenommen sind, weiterhin vorteilhaft im Beifahrerbereich in Fahrzeuglängsachsenrichtung gesehen in einem Freiraum vor dem Personenausströmer-Luftzufuhrkanal und damit im wesentlichen außerhalb des potentiellen Kopfaufprall-Instrumententafelwandbereichs angeordnet werden. Insbesondere in Verbindung mit einem Aufbau, bei dem der hintere Instrumententafelwandbereich als potentieller Kopfaufprall-Instrumententafelwandbereich wenigstens bereichsweise aus einem energieabsorbierenden Material hergestellt ist, kann bei einem Kopfaufprall auf diesen Bereich bereits relativ viel Aufprallenergie absorbiert werden, was zu einer erheblichen Reduzierung der Beeinträchtigungsgefahr für den Fahrzeuginsassen führt. Dies insbesondere dann, wenn der potentielle Kopfaufprallbereich aus einem unter Energieabsorption deformierbaren Material hergestellt ist und der gewonnene Freiraum unterhalb des potentiellen Kopfaufprallbereichs der Instrumententafel als Deformationsraum ausgebildet ist, so dass bei einem Kopfaufprall auf den potentiellen Kopfaufprallbereich dieser Bereich der Instrumententafel unter Energieabsorption ungehindert in den Deformationsraum hinein verformbar ist. Mit einem derartigen Aufbau kann besonders viel Aufprallenergie absorbiert werden. Da es sich bei dem im hinteren Instrumententafelbereich angeordneten Personenausströmer-Luftzufuhrkanat um kein tragendes und steifes Bauteil handelt, wird eine eventuell notwendige Deformation des potentiellen Kopfaufprallbereichs der Instrumententafel in den Freiraum als Deformationsraum hinein nicht wesentlich beeinträchtigt, da der Personenausströmer-Luftzufuhrkanal diese Deformationsbewegung ohne weiteres mitmachen kann.

Besonders bevorzugt ist hierbei der potentielle Kopfaufprall-Instrumententafelwandbereich im wesentlichen aus einer vorzugsweise mit einer Slushhaut überzogenen Trägerschicht aus einem Energieabsorptionsschaummaterial hergestellt. Ein derartiger Aufbau ist bei einer hohen Effektivität auch relativ günstig realisierbar.

Ein weiterer Vorteil dieses neuen Luftkanalkonzeptes ist es, dass sich hierdurch kürzeste Verbindungswege des Luftkanals zu den Personenausströmerdüsen, die regelmäßig im hinteren, den Fahrzeuginsassen zugewandten Instrumententafelbereich angeordnet sind, ergeben. Dies ist insbesondere dann der Fall, wenn der Personenausströmer-Luftzufuhrkanal in einem in Fahrzeugquerachsenrichtung gesehen mittleren Instrumententafelbereich mit der Luftversorgungseinrichtung gekoppelt ist und von dort aus in etwa geradlinig in Fahrzeugquerachsenrichtung zu wenigstens einer randseitigen Personenausströmerdüse geführt ist. Dadurch lassen sich auch evtl. Strömungsverluste reduzieren. Zudem kann durch die geradlinige Ausbildung des Personenausströmer-Luftzufuhrkanals im Gegensatz zum U-förmigen Aufbau des gattungsgemäßen Standes der Technik auch Material eingespart werden, was sich insbesondere in Verbindung mit einer Serienfertigung als besonders vorteilhaft hinsichtlich der Materialkosten erweist.

Der Personenausströmer-Luftzufuhrkanal kann integral mit der Instrumententafelunterseite ausgebildet sein oder aber auch durch eine Schraub- und/oder Klipp- und/oder Schweißverbindung im wesentlichen luftdicht an der Instrumententafelunterseite festgelegt sein.
Ein besonders vorteilhafter und materialsparender Aufbau ergibt sich, wenn ein Unterseitenwandbereich der Instrumententafel Bestandteil der Luftzufuhrkanalwand ist.

Gemäß einer besonders bevorzugten, weiteren Ausgestaltung der Erfindung kann der vom Personenausströmer-Luftzufuhrkanal ausgehende wenigstens eine Stichkanal so in den Bereich der Luftdurchtrittsöffnungen im vorderen Instrumententafelwandbereich geführt sein, dass dieser von oben her gesehen ein im Freiraum vor dem Personenausströmer-Luftzufuhrkanal angeordnetes Airbagmodul nicht überdeckt. Damit ist keine Behinderung des sich aufblasenden Airbags durch den oder die Stichkanäle möglich. Dies trägt dazu bei, die Funktionssicherheit der Anordnung sicherzustellen.

Weiter kann in einem tragenden Grundkörper des vorderen Instrumententafelwandbereichs wenigstens eine Ausströmdüse integriert sein, die dann vorteilhafterweise mit dem wenigstens einen Stichkanal unmittelbar verbunden ist. Dadurch lässt sich somit insgesamt auf einfache Weise eine sehr gute Möglichkeit zur diffusen Belüftung realisieren.

Bevorzugt ist der Grundkörper hier von oben her mittels einer Abdeckung abgedeckt, die durchgehend perforiert ist mit einem Perforationsmuster dergestalt, dass über die Perforierungen als Luftdurchtrittsöffnungen im Bereich der wenigstens einen Ausströmdüse eine diffuse Belüftung einstellbar ist. Besonders vorteilhaft kann in eine derartige Abdeckung, die Perforierungen aufweist, eine Airbagaustrittöffnung ausgebildet werden, indem z.B. wenigstens ein Teilbereich der Perforierungen in Verbindung mit dem darunterliegenden Grundkörper so mittels wenigstens einer Materialschwächung und/oder Sollbruchstelle versehen ist, das darin die Airbagaustrittöffnung ausbildbar ist. In Verbindung mit einer derartigen perforierten Abdeckung lassen sich die z.B. Materialschwächungen hervorragend kaschieren, falls dies gewünscht ist. Zudem kann die Abdeckung dann hier in einer Doppelfunktion sowohl als Abdeckung eines Grundkörpers zur Ausbildung einer Einrichtung zur diffusen Belüftung als auch als Abdeckklappe für eine Airbagaustrittöffnung fungieren. Besonders bevorzugt ist hier ein Aufbau, bei dem im Bereich des instrumententafelseitigen Airbagaustrittbereichs im Grundkörper eine Aussparung vorgesehen ist und bei dem die perforierte Abdeckung in diesem Bereich zur Ausbildung wenigstens einer aufschwenkbaren Abdeckklappe mit entsprechenden Sollbruchstellen versehen ist und die Abdeckung von oben her abdeckt. Eine derartige Abdeckklappe ist besonders einfach mit wenig Anpresskraft auf- und überdrückbar, so dass bereits dadurch der anfängliche Fülldruck erheblich reduziert werden kann. Dadurch kann die Aggressivität des Airbags insgesamt erheblich reduziert werden.

Gemäß einer weiteren, besonders bevorzugten Ausgestaltung der Erfindung ist ein mit einer Defroster-Luftversorgungseinrichtung gekoppelter Defroster-Luftkanal vorgesehen, der unterhalb des vorderen Instrumententafelwandbereichs entlang des gesamten unteren Windschutzscheibenrandbereichs verläuft. Dieser Defroster-Luftkanal ist vorzugsweise einstückig mit dem Personenausströmer-Luftzufuhrkanal ausgebildet, kann jedoch auch als separates Bauteil ausgebildet sein. Im vorderen Instrumententafelwandbereich sind Defrosterdüsen ausgebildet, um die Luft vom Defroster-Luftkanal zur Windschutzscheibe zuführen zu können. Weiter kann der Defroster-Luftkanal in Fahrzeugquerachsenrichtung gesehen randseitig, in Fahrzeuglängsachsenrichtung gesehen von der Windschutzscheibe weg nach hinten in den hinteren Instrumententafelwandbereich des dort endenden Personenausströmer-Luftzufuhrkanals geführt sein zum Defrosten von Seitenscheibenbereichen über entsprechend zugeordnete Defrosterdüsen. Dadurch kann im Bereich zwischen dem Personenausströmer-Luftzufuhrkanal und dem Defroster-Luftkanal der Freiraum als Montageraum für das Airbagmodul wenigstens bereichsweise eingeschlossen werden. Zudem ist hier mit einem derartigen Defroster-Luftkanal eine besonders effektive Zuführung von Defrosterluft zu den Scheibenbereichen möglich. Durch den erfindungsgemäßen Aufbau der Belüftungsvorrichtung bei dem wenigstens ein Sickkanal vom Personenausströmer-Luftzufuhrkanal ausgeht für eine Luftzuführung zu den Luftdurchtrittsöffnungen für eine diffuse Belüftung des Fahrzeuginnenraums, ist der Defroster-Luftkreislauf vom Personenausströmer-Luftkreislauf separiert, so dass beim Defrosten keine Luft aufgrund des wenigstens einen Stickkanals abgezweigt wird.

Gemäß einer weiteren, besonders bevorzugten Ausgestaltung der Erfindung ist der wenigstens eine Airbag im nicht aktivierten, zusammengefalteten Grundzustand hinter dem der Windschutzscheibe zugeordneten, vorderen Instrumententafelwandbereich als instrumententafelseitigem Airbagaustrittwandbereich angeordnet. Die im vorderen tnstrumententafelwandbereich ausbildbare Airbagaustrittöffnung weist einen vorgebbaren Sicherheitsabstand zu einem potentiellen Kopfaufprallbereich eines Fahrzeuginsassen im sich von der Windschutzscheibe weg in Richtung Fahrzeuginnenraum an den vorderen Instrumententafelwandbereich hin anschließenden Kopfaufprall-Instrumententafelwandbereich auf. Der Sicherheitsabstand ist dabei so vorgebbar, dass der Airbag nach einem dem Sicherheitsabstand zwischen der Airbagaustrittöffnung und dem potentiellen Kopfaufprallbereich entsprechenden Vorschubweg in Richtung Fahrzeuginnenraum einen Fülldruck aufweist, der gegenüber dem anfänglichen Fülldruck im Airbag zu Beginn der Airbagaktivierung entsprechend vorgebbarer Grenzwerte reduziert ist.

Mit einem derartigen Sicherheitsabstand zwischen der Airbagaustrittöffnung und einem potentiellen Kopfaufprallbereich eines Fahrzeuginsassen wird vorteilhaft erreicht, dass insbesondere bei sich out-of-position befindlichen Fahrzeuginsassen im Beifahrerbereich, wie z.B. hinter der instrumententafel stehenden Kindern, die ggfs. zudem noch vor der Aktivierung des Airbags mit dem Kopf auf den Kopfaufprallbereich der Instrumententafel aufprallen bzw. sich mit diesem auf den Kopfaufprallbereich zubewegen, die Gefahr einer Beeinträchtigung der Fahrzeuginsassen erheblich reduziert wird, da der durch die Airbagaustrittöffnung im vorderen Instrumententafelwandbereich austretende Airbag bis zum Auftreffen auf den z.B. Kopf des Fahrzeuginsassen bereits einen erheblichen Teil seines sehr hohen anfänglichen Fülldrucks abgebaut hat, so dass der Aufprall des Airbags auf den Fahrzeuginsassen sehr viel weniger aggressiv ist. Je größer der Sicherheitsabstand zwischen der Airbagaustrittöffnung und dem potentiellen Kopfaufprallbereich der Instrumententafel ist, desto geringer ist die Aggressivität des Airbags bei einem tatsächlichen Auftreffen auf einen Fahrzeuginsassen, da der Fülldruck im Airbag insbesondere zu Beginn der Airbagentfaltung mit jedem zurückgelegten Zentimeter erheblich abnimmt.

Aufgrund des Sicherheitsabstandes kann somit der Airbag nach wie vor unmittelbar in Richtung auf den gewünschten Aufblasbereich zu aufgeblasen werden, wobei jedoch der Fülldruck im Airbag entlang des Sicherheitsabstandes so weit abgebaut wird, vorzugsweise bis zum gewünschten Endfülldruck des Airbags, dass die Aggressivität des Airbags beim Auftreffen auf einen sich out-of-position befindlichen Fahrzeuginsassen soweit wie möglich reduziert ist. Aufgrund des hohen anfänglichen Fülldrucks kann der Airbag während des Aufblasens den Sicherheitsabstand sehr schnell überwinden, so dass es dadurch auch zu keiner nennenswerten Verzögerung beim Aufblasen des Airbags vor einem Fahrzeuginsassen kommt, der sich z.B. in einer normalen Sitzposition befindet.

Gemäß einer besonders bevorzugten Ausgestaltung ist der Sicherheitsabstand so festgelegt, dass der Fülldruck im Airbag nach einem Vorschubweg des Airbags entsprechend dem festgelegten Sicherheitsabstand im potentiellen Kopfaufprallbereich höchstens noch in etwa 15 %, bevorzugt höchstens in etwa 10 % und höchst bevorzugt höchstens in etwa 5 % des anfänglichen Gasdrucks beträgt. Da der Fülldruck im Airbag eine Funktion des zurückgelegten Weges ist, soll der Sicherheitsabstand nach einer weiteren, bevorzugten Ausgestaltung in Abhängigkeit von der jeweiligen Aufprallsituation, z.B. wenigstens in etwa 10 cm, bevorzugt jedoch wenigstens 15 cm und höchst bevorzugt wenigstens in etwa 20 cm betragen. Dadurch lassen sich sehr gute Ergebnisse hinsichtlich der verringerten Aggressivität des Airbags erzielen. Gemäß einer konkreten Ausführungsform weist der Airbag einen anfänglichen Fülldruck zwischen in etwa 30 bar und 35 bar auf und beträgt der Fülldruck nach einem Vorschubweg von in etwa 100 mm in etwa 2,5 bis 3,5 bar und vorzugsweise nach einem Vorschubweg von in etwa 200 mm in etwa 1,5 bis 2,5 bar. Gemäß einer derartigen konkreten Ausführungsform hat der Airbag somit nach einem Vorschubweg von in etwa 100 mm in etwa 90 % und nach einem Vorschubweg von in etwa 200 mm in etwa 95 % seines anfänglichen Fülldrucks abgebaut, wobei der gewünschte Fülldruck im Airbag am Ende des Aufblasvorgangs in etwa 1,5 bis 2,5 bar beträgt. Mit einem derartigen, konkreten Aufbau wird somit vorteilhaft erreicht, dass bei einem Sicherheitsabstand von in etwa 200 mm die Aggressivität des Airbags in der maximal möglichen Weise reduziert ist. Bereits bei einem Sicherheitsabstand von in etwa 100 mm ist die Aggressivität des Airbags hier so reduziert, dass die Beeinträchtigungsgefahr für die Fahrzeuginsassen, insbesondere für Kinder, die sich im Beifahrerbereich out-of-position befinden, erheblich reduziert ist.

Grundsätzlich gibt es verschiedene Möglichkeiten, den Anfangs- und Endpunkt der dem Sicherheitsabstand entsprechenden Wegstrecke festzulegen. So ist es z.B. möglich, den einen Endpunkt des Sicherheitsabstandes in etwa in einem mittleren Bereich der ausbildbaren Airbagaustrittöffnung festzulegen und auch den anderen Endpunkt in etwa in einem mittleren Bereich des potentiellen Kopfaufprallbereichs der Instrumententafel festzulegen. Besonders bevorzugt ist der Sicherheitsabstand im Querschnitt durch die Instrumententafel gesehen jedoch in etwa die geradlinige kürzeste Verbindung zwischen dem der Airbagaustrittöffnung zugewandten Beginn des potentiellen Kopfaufprallbereichs und dem dem potentiellen Kopfaufprallbereich zugewandten Beginn der Airbagaustrittöffnung. Dadurch können etwaige Ungenauigkeiten von vomeherein minimiert und eine Auslegung optimiert werden. Zudem stellt hier dann vorzugsweise der Beginn des Kopfaufprallbereichs den Grenzbereich dar, auf den je nach den unterschiedlichen Kopfaufprallsituationen, z.B. bei stehendem Kind mit 3 Jahren und bei sitzendem Kind, unangegurtet, mit 6 Jahren entsprechend vorgegebenen Versuchsbedingungen, ein Fahrzeuginsasse mit dem Kopf aufprallen kann. Denn abhängig von der Ausgangsposition kann der Kopfaufprall einmal mehr und einmal weniger in Richtung vorderer Instrumententafelbereich liegen. Der Sicherheitsabstand ist hier dann vorzugsweise von dem Bereich des potentiellen Kopfaufprallbereichs aus gesehen gemessen, der von allen Situationen am nächsten in Richtung zur Airbagaustrittöffnung liegt. Dies erhöht die Funktionssicherheit wesentlich.

Gemäß einer weiteren, bevorzugten Ausgestaltung ist vorgesehen, dass das Airbaggehäuse so ausgebildet ist, dass der darin aufgenommene, wenigstens eine Airbag im montierten Grundzustand seitlich neben dem wenigstens einen Gasgenerator angeordnet ist. Dadurch wird ein flacher, insbesondere für beengte Einbausituationen geeigneter Aufbau des Airbagmoduls erzielt.

Weiter kann vorgesehen sein, dass im Verbindungsbereich zwischen einem dem Gasgenerator aufnehmenden Gasgenerator-Gehäusebereich und einem den Airbag aufnehmenden Airbag-Gehäusebereich wenigstens eine Materialschwächung bzw. Sollbruchstelle vorgesehen ist, die bei einer Krafteinwirkung auf einen der beiden Gehäuseteile, insbesondere bei einer Krafteinwirkung auf den wenigstens bereichsweise in einen deformierbar gestalteten, potentiellen Kopfaufprallbereich der Instrumententafel ragenden Gasgenerator-Gehäusebereich, bricht und ein auf Block gehen des Deformationsbereiches verhindert. Mit einem derartigen Aufbau, bei dem Sollbruchstellen und/oder Materialschwächungen vorgesehen sind, wird erreicht, dass ein sich in einem Deformationsbereich befindlicher Gehäuseteilbereich, wie dies insbesondere bei besonders beengten Einbauverhältnissen der Fall sein kann, die Deformation nicht zu sehr behindert. Die Sollbruchstelle und/oder Materialschwächung kann dabei so ausgebildet sein, dass der Gasstrom in den Airbag hinein vollständig unterbunden wird, falls dies erwünscht ist, indem z.B. der eine Gehäuseteilbereich abgesprengt wird. Alternativ dazu kann jedoch auch eine Materialschwächung z.B. in Form einer plastischen Verformung vorgesehen sein, die nach wie vor einen Gasstrom in den Airbag ermöglicht.

Die Erfindung wird nachfolgend anhand einer Zeichnung näher erläutert.

Es zeigen:
- Fig. 1: einen schematischen Querschnitt durch eine Instrumententafel im Beifahrerbereich,
- Fig. 2: eine schematische, perspektivische Darstellung des Beifahrerbereichs eines mit einem Defroster-Luftkanal kombinierten Personenausströmer-Luftzufuhrkanals,
- Fig. 3: eine schematische Draufsicht auf die Darstellung gemäß Fig. 2,
- Fig. 4: einen schematischen Querschnitt durch die Instrumententafel im Beifahrerbereich gemäß Fig. 1 mit strichliert eingezeichnetem, potentiellen Kopfaufprallfall,
- Fig. 5: einen schematischen Querschnitt durch eine Instrumententafel im Beifahrerbereich gemäß Fig. 1 mit einer alternativen Situation eines Kopfaufprallfall,
- Fig. 6: einen schematischen Querschnitt durch eine Instrumententafel im Beifahrerbereich, wobei der Schnittverlauf durch einen Stichkanal zu einer diffusen Belüftung gewählt ist,
- Fig. 7: eine schematische, perspektivische Darstellung eines beifahrerseitigen Personenausströmer-Luftzufuhrkanals mit kombiniertem Defroster-Luftkanal und beispielhaft dargestellten Stichkanälen von dem Personenausströmer-Luftzufuhrkanal weg,
- Fig. 8: eine schematische Draufsicht entsprechend Fig. 7,
- Fig. 9: einen schematischen Querschnitt durch eine Instrumententafel im Beifahrerbereich gemäß dem Stand der Technik,
- Fig. 10: eine schematische, perspektivische Darstellung eines mit einem Defroster-Luftkanal kombinierten Personenausströmer-Luftzufuhrkanals gemäß dem Stand der Technik im Beifahrerbereich,
- Fig.11: eine schematische Draufsicht auf die Fig. 10 gemäß dem Stand der Technik.

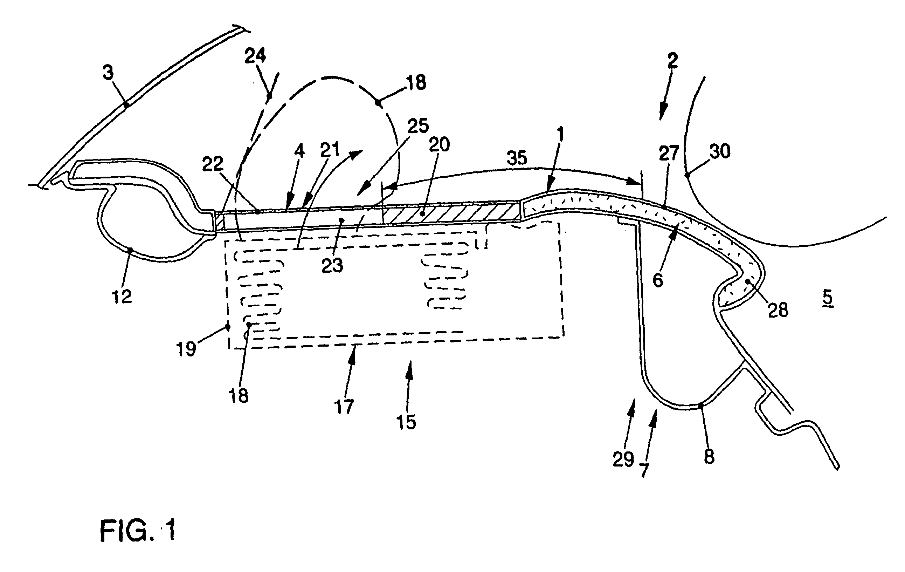

In Fig. 1 ist schematisch ein Querschnitt durch eine Instrumententafel 1 im Beifahrerbereich 2 eines Kraftfahrzeugs gezeigt. Die Instrumententafel 1 weist einen einer Windschutzscheibe 3 zugeordneten vorderen Instrumententafelwandbereich 4 und einen sich im Querschnitt durch die Instrumententafel gesehen von der Windschutzscheibe 3 weg in Richtung Fahrzeuginnenraum 5 an den vorderen Instrumententafelwandbereich 4 hin anschließenden hinteren Instrumententafelwandbereich 6 als potentiellen Kopfaufprall-Instrumententafelwandbereich auf.

Eine erfindungsgemäße Belüftungsvorrichtung 7 weist einen mit einer hier nicht dargestellten Luftversorgungseinrichtung gekoppelten Personenausströmer-Luftzufuhrkanal 8 zur Luftzuführung zu im Instrumententafelwandbereich angeordneten und hier nicht dargestellten Personenausströmerdüsen auf, wobei der Personenausströmer-Luftzufuhrkanal 8 von der Instrumententafel 1 überdeckt ist.

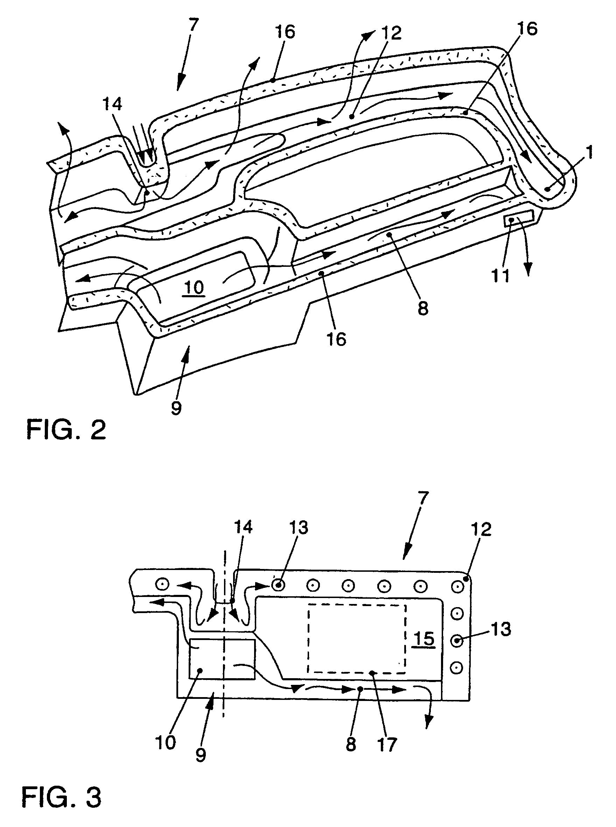

Der Personenausströmer-Luftzufuhrkanal 8 verläuft im Beifahrerbereich 2 unterhalb des potentiellen Kopfaufprall-Instrumententafelwandbereichs 6 und ist in einem mittleren Instrumententafelbereich 9 (Fig. 2, 3) über eine Lufteintrittsöffnung 10 mit der Luftversorgungseinrichtung gekoppelt und von dort aus in etwa geradlinig in Fahrzeugquerachsenrichtung zu einer randseitigen Personenausströmerdüse geführt. Eine Ausströmöffnung 11 des Personenausströmer-Luftzufuhrkanals 8 ist einer hier nicht dargestellten Personenausströmerdüse zugeordnet.

Wie dies den Fig. 1 bis 3 weiter entnommen werden kann, ist der Personenausströmer-Luftzufuhrkanal 8 einstückig mit einem mit einer Defroster-Luftversorgungseinrichtung gekoppelten Defroster-Luftkanal 12 ausgebildet, der unterhalb des vorderen Instrumententafelwandbereichs 4 im wesentlichen entlang des gesamten unteren Windschutzscheibenrandbereichs verläuft. Wie dies in der Fig. 3 durch die nach oben gerichteten Pfeile 13 schematisch dargestellt ist, sind im der Windschutzscheibe 3 zugeordneten, vorderen Instrumententafelwandbereich 4 hier nicht im Detail dargestellte Defrosterdüsen ausgebildet zur Zuführung von Luft vom Defroster-Luftkanal 12 zur Windschutzscheibe 3. Die Luftzuführung zum Defroster-Luftkanal 12 erfolgt hier über eine Defroster-Lufteintrittsöffnung 14.

Wie dies den Fig. 2 und 3 weiter entnommen werden kann, ist der Defroster-Luftkanal 12 in einem in Fahrzeugquerachsenrichtung gesehenen Randbereich in Fahrzeuglängsachsenrichtung von der Windschutzscheibe 3 weg nach hinten in den hinteren Instrumententafelwandbereich 6 des dort endenden Personenausströmer-Luftzufuhrkanals 8 geführt zum Defrosten von Seitenscheibenbereichen über dort entsprechend zugeordnete Defrosterdüsen, die hier nicht im Detail dargestellt sind. Dadurch wird, wie dies insbesondere aus den Fig. 2 und 3 ersichtlich ist, im Bereich zwischen dem Personenausströmer-Luftzufuhrkanal 8 und dem Defroster-Luftkanal 12 ein Freiraum 15 als Montageraum ausgebildet.

Wie dies den Fig. 1 bis 3 weiter zu entnehmen ist, weist sowohl der Defroster-Luftkanal 12 als auch der Personenausströmer-Luftzufuhrkanal 8 jeweils an einem der Instrumententafelunterseite zugewandten Bereich Schweißverbindungsflächen 16 auf, über die der Personenausströmer-Luftzufuhrkanal 8 und der Defroster-Luftkanal 12 an der Instrumententafelunterseite verschweißt werden können, wie dies in der Fig. 1 im montierten Zustand dargestellt ist. Dadurch bildet jeweils eine Unterseitenwand der Instrumententafel 1 eine Wand des Defroster-Luftkanals 12 und des Personenausströmer-Luftzufuhrkanals 8 aus.

In den Freiraum 15, d.h. im Beifahrerbereich 2 in Fahrzeuglängsachsenrichtung gesehen vor dem Personenausströmer-Luftzufuhrkanal 8 und damit außerhalb des potentiellen Kopfaufprall-Instrumententafelwandbereichs 6 kann, wie dies in den Fig. 1 und 3 schematisch und strichliert eingezeichnet ist, ein Airbagmodul 17 angeordnet werden, das einen in der Fig. 1 strichliert dargestellten Airbag 18 sowie einen hier nicht dargestellten Gasgenerator als Fülleinrichtung aufweist, die in einem Airbaggehäuse 19 aufgenommen sind. Das Airbaggehäuse 19 ist mittelbar über einen Schusskanal oder unmittelbar, was hier allerdings nicht dargestellt ist, z.B. wenigstens bereichsweise an einer Instrumententafelunterseite festgelegt.

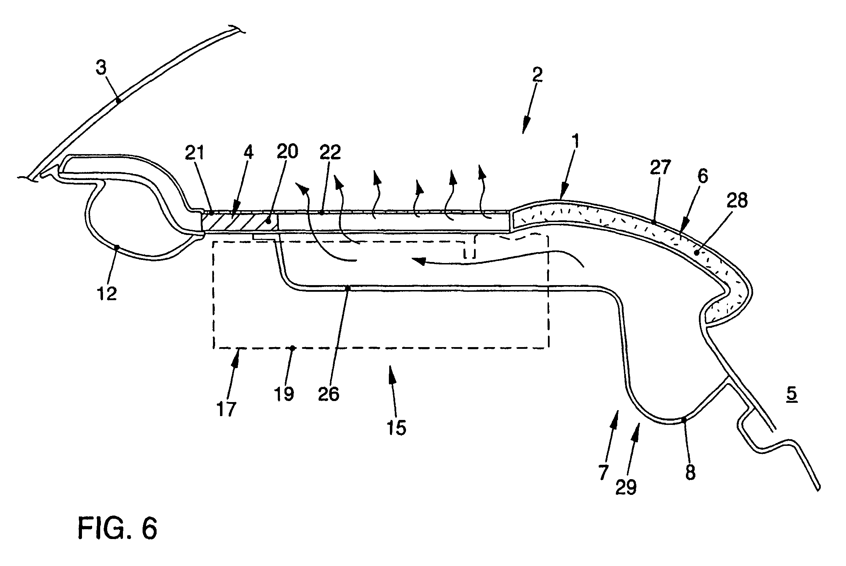

Wie dies insbesondere aus den Fig. 1 und 6 ersichtlich ist, kann wenigstens der der Windschutzscheibe 3 zugewandte, vordere Instrumententafelwandbereich 4 aus einem tragenden Grundkörper 20 ausgebildet sein, in dem wenigstens eine hier nicht dargestellte Ausströmdüse integriert ist. Der Grundkörper 20 ist von oben her mittels einer Abdeckung 21 abgedeckt, die durchgehend mit einem Perforationsmuster perforiert ist dergestalt, dass über die Perforierungen 22 als Luftdurchtrittsöffnungen wenigstens im Bereich der wenigstens einen Ausströmdüse eine diffuse Belüftung einstellbar ist. Im Grundkörper 20 ist, wie dies in der Fig. 1 dargestellt ist, eine Aussparung 23 vorgesehen. Zudem ist die perforierte Abdeckung 21 in diesem Bereich zur Ausbildung einer in der Fig. 1 strichliert dargestellten, aufschwenkbaren Abdeckklappe 24 zur Freigabe einer Airbagaustrittöffnung 25 im vorderen Instrumententafelwandbereich 4 mit entsprechenden Sollbruchstellen versehen, wobei die Abdeckung 21 die Aussparung 23 im nicht aktivierten Zustand, wie dies in der Fig. 1 und in der Fig. 6 mit durchgezogenen Linien dargestellt ist, für eine durchgehende, gleichmäßige Optik von oben her abdeckt.

Im Falle der Airbagaktivierung drückt dann der Airbag 18 mit seinem hohen anfänglichen Fülldruck von z.B. 30 bar auf die Abdeckklappe 24 zur Freigabe der Airbagaustrittöffnung 25. Um zu verhindern, dass die Abdeckklappe 24 während des Aufschwenkens auf die Windschutzscheibe 3 auftrifft, können im Bereich der Airbagaustrittöffnung 25 Rückhaltemittel vorgesehen sein, wie z.B. ein Fangband, die den Aufschwenkwinkel der Abdeckklappe 24 begrenzen, was hier jedoch nicht dargestellt ist. Zudem kann mit einem bestimmten Anstellwinkel der Abdeckklappe 24 eine bestimmte Aufblasrichtung des Airbags 18 in Richtung Fahrzeuginnenraum 5 vorgegeben werden.

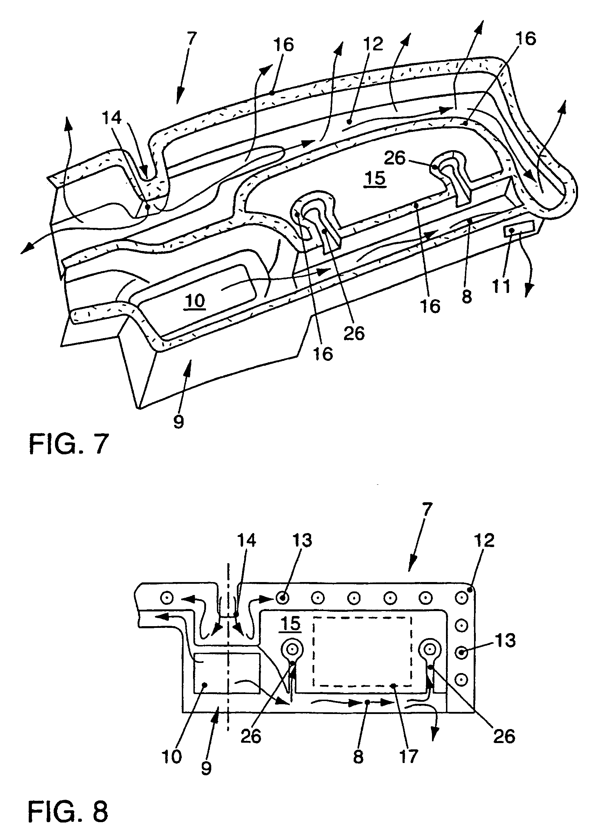

Wie dies insbesondere der Fig. 6 in Verbindung mit den Fig. 7 und 8 zu entnehmen ist, sind vom Personenausströmer-Luftzufuhrkanal 8 ausgehend hier beispielhaft zwei Stichkanäle 26 in den vorderen Instrumententafelwandbereich 4 und dort in den Bereich unterhalb der Perforierungen 22 geführt. Wie dies insbesondere aus der Fig. 7 ersichtlich ist, sind die Stichkanäle 26 so in dem Bereich der Perforierungen 22 im vorderen Instrumententafelwandbereich 4 geführt, dass diese von oben her gesehen das Airbagmodul 17 nicht überdecken. Mit derartigen Stichkanälen 26 wird eine einfache Luftzufuhr zu den Perforierungen 22 zur diffusen Belüftung des Fahrzeuginnenraums 5 geschaffen.

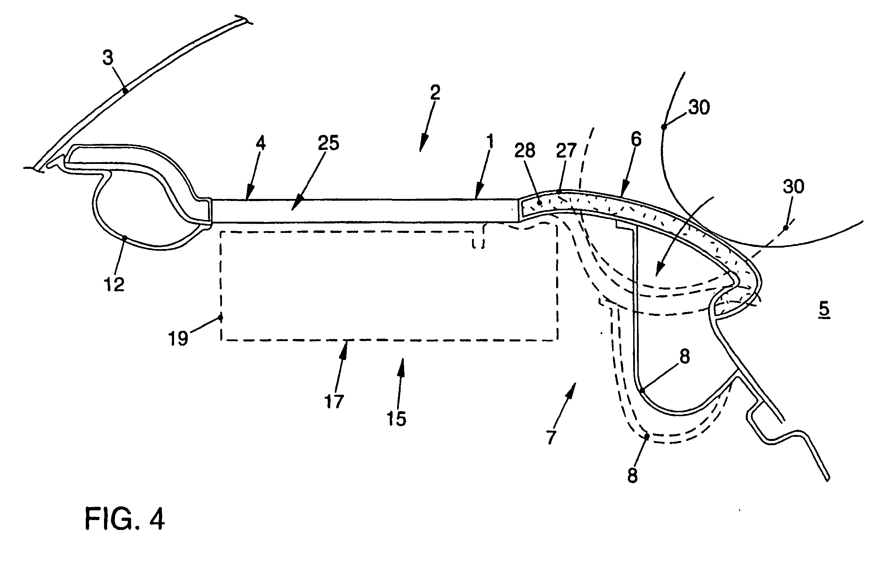

Wie dies den Fig. 1, 4, 5 und 6 entnommen werden kann, kann der potentielle Kopfaufprallbereich als hinterer Instrumententafelwandbereich 6 zum Teil aus einem unter Energieabsorption deformierbaren Material hergestellt sein, so z.B. aus einer mit einer Slushhaut 27 überzogenen Energieabsorptionsschaum-Trägerschicht 28. Im unterhalb des hinteren Instrumententafelwandbereichs 6 als potentiellen Kopfaufprallbereich liegenden Bereich ist ein Deformationsraum 29 ausgebildet, in den hinein sich der potentielle Kopfaufprallbereich der Instrumententafel 1, wie dies in der Fig. 4 lediglich schematisch und strichliert dargestellt ist, bei einem Aufprall eines Fahrzeuginsassen mit einem Kopf 30 unter Energieabsorption ungehindert verformen kann.

Wie dies der Fig. 4 weiter entnommen werden kann, wird diese Deformation des potentiellen Kopfaufprallbereichs in den Deformationsraum 29 hinein durch den Personenausströmer-Luftzufuhrkanal 8 nicht wesentlich behindert, da der Personenausströmer-Luftzufuhrkanal 8 regelmäßig aus einem wenig steifen Kunststoffmaterial hergestellt ist und somit die Deformation mitmachen kann, ohne ein auf Block gehen des Deformationsbereichs zu bewirken.

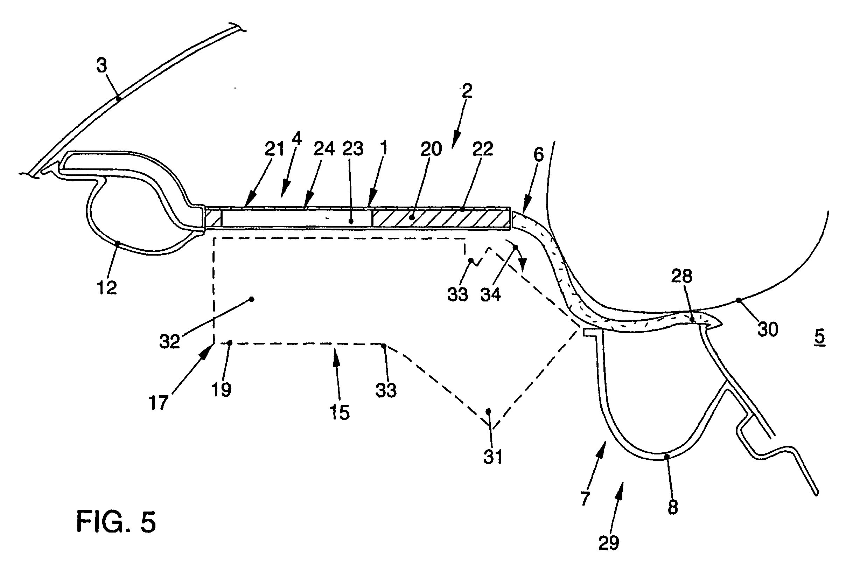

Insbesondere für den in der Fig. 5 gezeigten Fall, dass beengte Einbauverhältnisse vorhanden sind und wenigstens ein Teilbereich des Airbaggehäuses 19, z.B. ein einen hier nicht dargestellten Gasgenerator aufnehmender Gasgenerator-Gehäusebereich 31 randseitig in den hinteren Instrumententafelwandbereich 6 als potentiellen Kopfaufprallbereich ragt, kann vorgesehen sein, dass dieser Gasgenerator-Gehäusebereich 31 mit einem den Airbag 18 aufnehmenden Airbag-Gehäusebereich 32 z.B. über Sollbruchstellen 33 verbunden ist. Dadurch wird erreicht, dass bei einer Krafteinwirkung auf den deformierbar gestalteten, potentiellen Kopfaufprallbereich als hinteren Instrumententafelwandbereich 6 und einem Aufprallkontakt des deformierbaren Teilbereichs mit dem Gasgenerator-Gehäusebereich 31 der Gasgenerator-Gehäusebereich 31 entlang der Sollbruchstellen 33 einknickt bzw. bricht, wie dies in der Darstellung der Fig. 5 lediglich strichliert und durch den Pfeil 34 dargestellt ist. Dadurch wird die Gefahr eines auf Block gehen des Deformationsbereiches erheblich reduziert.

Wie dies in der Fig. 1 lediglich schematisch eingezeichnet ist, ist das Airbagmodul 17 und damit insbesondere der Airbag 18 im nicht aktivierten, zusammengefalteten Grundzustand hinter dem der Windschutzscheibe 3 zugeordneten, vorderen Instrumententafelwandbereich 4 angeordnet. Die in diesem vorderen Instrumententafelwandbereich 4 ausbildbare Airbagaustrittöffnung 25 weist einen vorgebbaren Sicherheitsabstand 35 zu dem hinteren Instrumententafelwandbereich 6 als potentiellen Kopfaufprall-Instrumententafelwandbereich des Kopfes 30 eines Fahrzeuginsassen auf. Der Sicherheitsabstand 35 ist hier so vorgegeben, dass der Airbag 18 nach einem Vorschubweg in Richtung Fahrzeuginnenraum 5, der dem Sicherheitsabstand 35 zwischen der Airbagaustrittöffnung 25 und dem potentiellen Kopfaufprall-Instrumententafelwandbereich 6 entspricht, einen Gasdruck als Fülldruck aufweist, der gegenüber dem anfänglichen Gasdruck im Airbag 18 zu Beginn der Airbagaktivierung entsprechend vorgegebener Grenzwerte reduziert ist. Wie dies in der Fig. 1 lediglich beispielhaft und schematisch dargestellt ist, ist der Sicherheitsabstand 35 im Querschnitt gesehen vorzugsweise in etwa die geradlinige, kürzeste Verbindung zwischen dem besonders kritischen und potentiellen Kopfaufprallbereich und dem Beginn der Airbagaustrittöffnung 25.

Der hohe anfängliche Fülldruck von etwa 30 bar wird insbesondere auf den ersten Zentimetern, d.h. insbesondere nach einem Vorschubweg von etwa 100 mm bereits auf einen Druck von in etwa ungefähr 3 bar reduziert. In etwa ab einem Vorschubweg von 120 mm wird in etwa ein Druck von ungefähr 2 bar im Airbag erzielt, der dem am Ende des Aufblasvorgangs im Airbag vorhandenen Minusdruck entspricht. Das heißt, dass bereits bei einem Sicherheitsabstand von in etwa 120 mm die durch den Befüllvorgang und dem damit einhergehenden, hohen Fülldruck vorhandenen Airbagaggressivität erheblich reduziert ist. Dadurch lässt sich je nach den gegebenen Einbauverhältnissen beispielsweise bereits ab einem Sicherheitsabstand von in etwa 100 mm zwischen der Airbagaustrittöffnung 25 und dem Kopfaufprallbereich eine erhebliche Reduzierung der Beeinträchtigungsgefahr für sich out-of-position befindliche Fahrzeuginsassen, wie z.B. Kinder, erzielen, da die Aggressivität des Airbags 18 nach Durchlaufen des Sicherheitsabstandes 35, die durch den hohen anfänglichen Fülldruck bedingt ist, nahezu auf den Minimalwert reduziert ist.

### BEZUGSZEICHENLISTE

- 1: Instrumententafel
- 2: Beifahrerbereich
- 3: Windschutzscheibe
- 4: vorderer Instrumententafelwandbereich
- 5: Fahrzeuginnenraum
- 6: hinterer Instrumententafelwandbereich
- 7: Belüftungsvorrichtung
- 8: Personenausströmer-Luftzufuhrkanal
- 9: mittlerer Instrumententafelbereich
- 10: Lufteintrittsöffnung
- 11: Ausströmöffnung
- 12: Defroster-Luftkanal
- 13: Pfeile
- 14: Defroster-Lufteintrittsöffnung
- 15: Freiraum
- 16: Schweißverbindungsflächen
- 17: Airbagmodul
- 18: Airbag
- 19: Airbaggehäuse
- 20: Grundkörper
- 21: Abdeckung
- 22: Perforierung
- 23: Aussparung
- 24: Abdeckklappe
- 25: Airbagaustrittsöffnung
- 26: Stichkanal
- 27: Slushhaut
- 28: Energieabsorptionsschaum-Trägerschicht
- 29: Deformationsraum
- 30: Kopf
- 31: Gasgenerator-Gehäusebereich
- 32: Airbag-Gehäusebereich
- 33: Sollbruchstellen
- 34: Pfeil
- 35: Sicherheitsabstand

### Stand der Technik

- 100: Instrumententafel
- 101: Belüftungsvorrichtung
- 102: Beifahrerbereich
- 103: Windschutzscheibe
- 104: vordere Instrumententafelwandbereich
- 105: Fahrzeuginnenraum
- 106: hinterer Instrumententafelwandbereich
- 107: Personenausströmer-Luftzufuhrkanal
- 108: Defroster-Luftkanal
- 109: Schweißverbindungsflächen
- 110: Aufnahmeraum
- 111: Airbagmodul

## Patentansprüche

1. Belüftungsvorrichtung für ein Fahrzeug, insbesondere für ein Kraftfahrzeug, mit einer Instrumententafel (1), die im Beifahrerbereich einen einer Windschutzscheibe (3) zugeordneten vorderen Instrumententafelwandbereich (4) und einen sich im Querschnitt durch die Instrumententafel gesehen von der Windschutzscheibe weg in Richtung Fahrzeuginnenraum an den vorderen Instrumententafelwandbereich hin anschließenden, einem Beifahrer zugeordneten hinteren Instrumententafelwandbereich (6) als potentiellen Kopfaufprall-Instrumententafelwandbereich aufweist,
mit einem mit einer Luftversorgungseinrichtung (7) gekoppelten Personenausströmer-Luftzufuhrkanal (8) zur Luftzuführung zu im Instrumententafelwandbereich angeordneten Personenausströmerdüsen, wobei der Personenausströmer-Luftzufuhrkanal (8) von der Instrumententafel überdeckt ist,
mit einem Airbagmodul (17), das wenigstens einen Airbag (18) und wenigstens einen Gasgenerator aufweist, die in einem Airbaggehäuse (19) aufgenommen sind, wobei das Airbagmodul (17) im montierten Zustand von der Instrumententafel überdeckt ist,
wobei der Personenausströmer-Luftzufuhrkanal (8) im Beifahrerbereich unterhalb des potentiellen Kopfaufprall-Instrumententafelwandbereichs (4) verläuft und sich dort im wesentlichen in Fahrzeugquerachsenrichtung erstreckt, und
wobei das Airbagmodul (17) im Beifahrerbereich in Fahrzeuglängsachsenrichtung gesehen in einem Freiraum vor dem Personenausströmer-Luftzufuhrkanal(8) angeordnet und damit im wesentlichen außerhalb des potentiellen Kopfaufprall-Instrumententafelwandbereichs, dem vorderen Instrumententafelwandbereich (4) zugeordnet, angeordnet ist,
**dadurch gekennzeichnet,**
**dass** der der Windschutzscheibe (3) zugewandte vordere Instrumententafelwandbereich (4) wenigstens bereichsweise Luftdurchtrittsöffnungen (22) zur diffusen Belüftung des Fahrzeuginnenraums (5) aufweist, und
**dass** vom Personenauströmer-Luftzufuhrkanal (8) ausgehend wenigstens ein Stichkanal (26) in den Bereich unterhalb der Luftdurchtrittsöffnungen (22) geführt ist.

2. Belüftungsvorrichtung nach Anspruch 1, **dadurch gekennzeichnet, dass** der Personenausströmer-Luftzufuhrkanal (8) in einem in Fahrzeugquerachsenrichtung gesehen mittleren Instrumententafelbereich (9) mit der Luftversorgungseinrichtung gekoppelt ist und von dort aus in etwa geradlinig in Fahrzeugquerachsenrichtung zu wenigstens einer randseitigen Personenausströmerdüse geführt ist.

3. Belüftungsvorrichtung nach Anspruch 1 oder Anspruch 2, **dadurch gekennzeichnet, dass** der Personenausströmer-Luftzufuhrkanal (8) integral mit der Instrumententafelunterseite ausgebildet ist oder durch eine Schraub- und/oder Klipp- und/oder Schweißverbindung im wesentlichen luftdicht an der Instrumententafelunterseite festgelegt ist.

4. Belüftungsvorrichtung nach einem der Ansprüche 1 bis 3, **dadurch gekennzeichnet, dass** ein Unterseitenwandbereich der Instrumententafel Bestandteil der Personenausströmer-Luftzufuhrkanalwand ist.

5. Belüftungsvorrichtung nach einem der Ansprüche 1 bis 4, **dadurch gekennzeichnet, dass** der vom Personenausströmer-Luftzufuhrkanal (22) ausgehende wenigstens eine Stichkanal (26) so in den Bereich der Luftdurchtrittsöffnungen (22) im vorderen Instrumententafelwandbereich (4) geführt ist, dass dieser das im in Fahrzeuglängsachsenrichtung gesehenen Freiraum (15) vor dem Personenausströmer-Luftzufuhrkanal (8) angeordnete Airbagmodul (17) von oben her nicht überdeckt.

6. Belüftungsvorrichtung nach einem der Ansprüche 1 bis 5, **dadurch gekennzeichnet, dass** in einem tragenden Grundkörper (20) des vorderen Instrumententafelwandbereichs (4) wenigstens eine Ausströmdüse integriert ist, die mit dem wenigstens einen Stichkanal (26) verbunden ist.

7. Belüftungsvorrichtung nach Anspruch 6, **dadurch gekennzeichnet, dass** der Grundkörper (20) von oben her mittels einer Abdeckung (21) abgedeckt ist, die durchgehend perforiert ist mit einem Perforationsmuster dergestalt, dass über die Perforierungen (22) als Luftdurchtrittsöffnungen im Bereich der wenigstens einen Ausströmdüse eine diffuse Belüftung einstellbar ist.

8. Belüftungsvorrichtung nach einem der Ansprüche 1 bis 7, **dadurch gekennzeichnet, dass** ein mit einer Defroster-Luftversorgungseinrichtung (12) gekoppelter Defroster-Luftkanal vorgesehen ist, der unterhalb des vorderen Instrumententafelwandbereichs (4) entlang des gesamten unteren Windschutzscheibenrandbereichs verläuft, und dass im vorderen Instrumententafelwandbereich (4) Defrosterdüsen ausgebildet sind zur Zuführung von Luft vom Defroster-Luftkanal (12) zur Windschutzscheibe (3).

9. Belüftungsvorrichtung nach Anspruch 8, **dadurch gekennzeichnet, dass** der Defroster-Luftkanal (12) in einem in Fahrzeugquerachsenrichtung gesehenen Randbereich in Fahrzeuglängsachsenrichtung gesehen von der Windschutzscheibe (3) weg nach hinten in den hinteren Instrumententafelwandbereich (6) des dort endenden Personenausströmer-Luftzufuhrkanals (8) geführt ist zum Defrosten von Seitenscheibenbereichen über entsprechend zugeordnete Defrosterdüsen, so dass im Bereich zwischen dem Personenausströmer-Luftzufuhrkanal (8) und dem Defroster-Luftkanal (12) der Freiraum (15) als Montageraum für das Airbagmmodul (17) wenigstens bereichsweise eingeschlossen ist.

10. Belüftungsvorrichtung nach einem der Ansprüche 1 bis 9, **dadurch gekennzeichnet, dass** der potentielle Kopfaufprall-Instrumententafelwandbereich (6) der Instrumententafel (1) wenigstens bereichsweise aus einem energieabsorbierenden Material hergestellt ist.

11. Belüftungsvorrichtung nach Anspruch 10, **dadurch gekennzeichnet,**
**dass** der potentielle Kopfaufprall-Instrumententafelwandbereich (6) aus einem unter Energieabsorption deformierbaren Material hergestellt ist, und
**dass** im unterhalb des potentiellen Kopfaufprall-Instrumententafelwandbereichs (6) liegenden Bereich ein Deformationsraum (29) ausgebildet ist dergestalt, dass bei einem Kopfaufprall auf den potentiellen Kopfaufprallbereich dieser Bereich der Instrumententafel (1) unter Energieabsorption ungehindert in den Deformationsraum (29) hinein verformbar ist.

12. Belüftungsvorrichtung nach Anspruch 10 oder Anspruch 11, **dadurch gekennzeichnet, dass** der potentielle Kopfaufprall-Instrumententafelwandbereich (6) im wesentlichen aus einer vorzugsweise mit einer Slushhaut (27) überzogenen Trägerschicht (28) aus Energieabsorptionsschaum hergestellt ist.

13. Belüftungsvorrichtung nach einem der Ansprüche 1 bis 12, **dadurch gekennzeichnet,**
**dass** der wenigstens eine Airbag (18) im nicht aktivierten, zusammengefalteten Grundzustand hinter dem der Windschutzscheibe (3) zugeordneten, vorderen Instrumententafelwandbereich (4) als instrumententafelseitigem Airbagaustrittwandbereich angeordnet ist,
**dass** die im vorderen Instrumententafelwandbereich (4) ausbildbare Airbagaustrittöffnung (25) einen vorgebbaren Sicherheitsabstand (35) zu einem potentiellen Kopfaufprallbereich eines Fahrzeuginsassen im sich von der Windschutzscheibe (3) weg in Richtung Fahrzeuginnenraum (5) an den vorderen Instrumententafelwandbereich (4) hin anschließenden Kopfaufprall-Instrumententafelwandbereich (6) aufweist, und
**dass** der Sicherheitsabstand (35) so vorgebbar ist, dass der Airbag (18) nach einem dem Sicherheitsabstand (35) zwischen der Airbagaustrittöffnung (25) und dem potentiellen Kopfaufprallbereich entsprechenden Vorschubweg in Richtung Fahrzeuginnenraum (5) einen Fülldruck aufweist, der gegenüber dem anfänglichen Fülldruck im Airbag (18) zu Beginn der Airbagaktivierung entsprechend vorgebbarer Grenzwerte reduziert ist.

14. Belüftungsvorrichtung nach Anspruch 13, **dadurch gekennzeichnet, dass** der Sicherheitsabstand (35) so festgelegt ist, dass der Fülldruck im Airbag (18) nach einem Vorschubweg des Airbags (18) entsprechend dem Sicherheitsabstand (35) im potentiellen Kopfaufprallbereich höchstens in etwa 15 %, bevorzugt höchstens in etwa 10 %, höchst bevorzugt höchstens in etwa 5 % des anfänglichen Gasdrucks beträgt.

15. Belüftungsvorrichtung nach Anspruch 13 oder Anspruch 14, **dadurch gekennzeichnet, dass** der Sicherheitsabstand (35) in Abhängigkeit von der jeweiligen Aufprallsituation wenigstens in etwa 10 cm, bevorzugt wenigstens in etwa 15 cm, höchst bevorzugt wenigstens in etwa 20 cm beträgt.

16. Belüftungsvörrichtung nach einem der Ansprüche 13 bis 15, **dadurch gekennzeichnet, dass** der Airbag (18) einen anfänglichen Fülldruck zwischen in etwa 30 bar und 35 bar aufweist und der Fülldruck nach einem Vorschubweg von in etwa 100 mm in etwa 2,5 bis 3,5 bar und vorzugsweise nach einem Vorschubweg von in etwa 200 mm in etwa 1,5 bis 2,5 bar beträgt.

17. Belüftungsvorrichtung nach einem der Ansprüche 13 bis 16, **dadurch gekennzeichnet, dass** der Sicherheitsabstand (35) im Querschnitt durch die Instrumententafel (1) gesehen in etwa die geradlinige kürzeste Verbindung zwischen dem der Airbagaustrittöffnung (25) zugewandten Beginn des potentiellen Kopfaufprallbereichs und dem dem potentiellen Kopfaufprallbereich zugewandten Beginn der Airbagaustrittöffnung (25) ist.

18. Belüftungsvorrichtung nach einem der Ansprüche 1 bis 17, **dadurch gekennzeichnet, dass** das Airbaggehäuse (19) so ausgebildet ist, dass der darin aufgenommene wenigstens eine Airbag (18) im montierten Grundzustand seitlich neben dem wenigstens einen Gasgenerator angeordnet ist, und/oder
dass im Verbindungsbereich zwischen einem den Gasgenerator aufnehmenden Gasgenerator-Gehäusebereich (31) und einem den Airbag (18) aufnehmenden Airbag-Gehäusebereich (32) wenigstens eine Materialschwächung und/oder Sollbruchstelle (33) vorgesehen ist, die bei einer Krafteinwirkung auf einen der beiden Gehäuseteile (31), insbesondere bei einer Krafteinwirkung auf den wenigstens bereichsweise in einen deformierbar gestalteten, potentiellen Kopfaufprallbereich der Instrumententafel (1) ragenden Gasgenerator-Gehäusebereich (31), bricht und ein auf Block gehen des Deformationsbereiches verhindert.

## Claims

1. Ventilation device for a vehicle, in particular for a motor vehicle,
having an instrument panel (1) which, in the front passenger region, has a front instrument panel wall region (4) assigned to a windscreen (3) and a rear instrument panel wall region (6), as potential head-impact instrument panel wall region, which region, as seen in cross section through the instrument panel, adjoins the front instrument panel wall region away from the windscreen in the direction of the vehicle interior and is assigned to a front passenger,
having an individual vent air-feeding duct (8), which is coupled to an air supply device (7), for feeding air to individual vent nozzles arranged in the instrument panel wall region, the individual vent air-feeding duct (8) being covered by the instrument panel,
having an airbag module (17) which has at least one airbag (18) and at least one gas generator which are accommodated in an airbag housing (19), the airbag module (17), in the fitted state, being covered by the instrument panel,
the individual vent air-feeding duct (8) running below the potential head-impact instrument panel wall region (4) in the front passenger region and extending there essentially in the direction of the transverse axis of the vehicle, and
the airbag module (17) being arranged in the front passenger region, as seen in the direction of the longitudinal axis of the vehicle, in a free space in front of the individual vent air-feeding duct (8) and therefore being assigned to the front instrument panel wall region (4) essentially outside the potential head-impact instrument panel wall region,
**characterized**
**in that** the front instrument panel wall region (4) which faces the windscreen (3) has, at least in some regions, air passage openings (22) for the diffuse ventilation of the vehicle interior (5), and
**in that**, starting from the individual vent air-feeding duct (8), at least one branch duct (26) is guided into the region below the air passage openings (22).

2. Ventilation device according to Claim 1, **characterized in that** the individual vent air-feeding duct (8) is coupled in a central instrument panel region (9), as seen in the direction of the transverse axis of the vehicle, to the air supply device and is guided from there approximately rectilinearly in the direction of the transverse axis of the vehicle to at least one individual vent nozzle in the edge region.

3. Ventilation device according to Claim 1 or Claim 2, **characterized in that** the individual vent air-feeding duct (8) is formed integrally with the lower side of the instrument panel or is secured on the lower side of the instrument panel in an essentially airtight manner by means of a screw and/or clip and/or welding connection.

4. Ventilation device according to one of Claims 1 to 3, **characterized in that** a lower side wall region of the instrument panel is part of the individual vent air-feeding duct wall.

5. Ventilation device according to one of Claims 1 to 4, **characterized in that** the at least one branch duct (26) starting from the individual vent air-feeding duct (8) is guided into the region of the air passage openings (22) in the front instrument panel wall region (4) in such a manner that it does not cover the airbag module (17), which is arranged in the free space (15) in front of the individual vent air-feeding duct (8), as seen in the direction of the longitudinal axis of the vehicle, from above.

6. Ventilation device according to one of claims 1 to 5, **characterized in that** at least one discharge nozzle which is connected to the at least one branch duct (26) is integrated in a load-bearing basic body (20) of the front instrument panel wall region (4).

7. Ventilation device according to Claim 6, **characterized in that** the basic body (20) is covered from above by means of a covering (21) which is continuously perforated with a perforation pattern in such a manner that a diffuse ventilation can be set in the region of the at least one discharge nozzle via the perforations (22) as air passage openings.

8. Ventilation device according to one of Claims 1 to 7, **characterized in that** a defroster air duct which is coupled to a defroster air supply device (12) and runs along the entire lower windscreen edge region below the front instrument panel wall region (4) is provided, and **in that** defroster nozzles are formed in the front instrument panel wall region (4) for feeding air from the defroster air duct (12) to the windscreen (3).

9. Ventilation device according to Claim 8, **characterized in that** the defroster air duct (12) is guided in an edge region, as seen in the direction of the transverse axis of the vehicle, away to the rear from the windscreen (3), as seen in the direction of the longitudinal axis of the vehicle, into the rear instrument panel wall region (6) of the individual vent air-feeding duct (8) ending there, in order to defrost side window regions via correspondingly assigned defroster nozzles, so that in the region between the individual vent air-feeding duct (8) and the defroster air duct (12) the free space (15) is enclosed, at least in some regions, as an installation space for the airbag module (17).

10. Ventilation device according to one of Claims 1 to 9, **characterized in that** the potential head-impact instrument panel wall region (6) of the instrument panel (1) is produced at least in some regions from an energy-absorbing material.

11. Ventilation device according to Claim 10, **characterized**
**in that** the potential head-impact instrument panel wall region (6) is produced from a material which can be deformed with energy being absorbed, and
**in that** a deformation space (29) is formed in the region situated below the potential head-impact instrument panel wall region (6) in such a manner that, when a head impacts against the potential head-impact region, this region of the instrument panel (1) can be deformed without obstruction, with energy being absorbed, into the deformation space (29).

12. Ventilation device according to Claim 10 or Claim 11, **characterized in that** the potential head-impact instrument panel wall region (6) is produced essentially from a backing layer (28) of energy-absorbing foam, preferably covered with a slush skin (27).

13. Ventilation device according to one of Claims 1 to 12, **characterized**
**in that** the at least one airbag (18), in the unactivated, collapsed basic state, is arranged behind the front instrument panel wall region (4), assigned to the windscreen (3), as the instrument-panel-side airbag outlet wall region,
**in that** the airbag outlet opening (25), which can be formed in the front instrument panel wall region (4), is at a predeterminable safety distance (35) from a potential head-impact region of a vehicle occupant in the head-impact instrument panel wall region (6) adjoining the front instrument panel wall region (4) away from the windscreen (3) in the direction of the vehicle interior (5), and
**in that** the safety distance (35) can be predetermined in such a manner that the airbag (18), after advancing in the direction of the vehicle interior (5) by a distance corresponding to the safety distance (35) between the airbag outlet opening (25) and the potential head-impact region, has a filling pressure which is reduced in accordance with predeterminable limit values in comparison with the initial filling pressure in the airbag (18) at the beginning of the airbag activation.

14. Ventilation device according to Claim 13, **characterized in that** the safety distance (35) is defined in such a manner that, after the airbag (18) has advanced by a distance corresponding to the safety distance (35), the filling pressure in the airbag (18) in the potential head-impact region is at most approximately 15%, preferably at most approximately 10%, most preferably at most approximately 5%, of the initial gas pressure.

15. Ventilation device according to Claim 13 or Claim 14, **characterized in that** the safety distance (35) is at least approximately 10 cm, preferably at least approximately 15 cm, most preferably at least approximately 20 cm, depending on the particular impact situation.

16. Ventilation device according to one of Claims 13 to 15, **characterized in that** the airbag (18) has an initial filling pressure of between approximately 30 bar and 35 bar and, after advancing by a distance of approximately 100 mm, the filling pressure is approximately 2.5 to 3.5 bar and, after advancing by a distance of approximately 200 mm, is approximately 1.5 to 2.5 bar.

17. Ventilation device according to one of Claims 13 to 16, **characterized in that** the safety distance (35), as seen in cross section through the instrument panel (1), is approximately the rectilinear, shortest connection between the start of the potential head-impact region facing the airbag outlet opening (25) and the start of the airbag outlet opening (25) facing the potential head-impact region.

18. Ventilation device according to one of Claims 1 to 17, **characterized**
**in that** the airbag housing (19) is designed in such a manner that the at least one airbag (18) which is accommodated therein, in the fitted basic state, is arranged laterally next to the at least one gas generator, and/or
**in that**, in the connecting region between a gas generator housing region (31) accommodating the gas generator and an airbag housing region (32) accommodating the airbag (18), at least one material weakening and/or predetermined breaking point (33) is provided and, when force is applied to one of the two housing parts (31), in particular when force is applied to the gas generator housing region (31), which protrudes at least in some regions into a deformably designed, potential head-impact region of the instrument panel (1), breaks and prevents the deformation region from forming a solid barrier.

## Revendications

1. Dispositif de ventilation pour un véhicule, en particulier pour un véhicule automobile,
avec un tableau de bord (1) qui présente, dans la région du passager, une région avant de paroi de tableau de bord (4) associée à un pare-brise (3) et une région arrière de paroi de tableau de bord (6) associée à un passager, se raccordant à la région avant de paroi de tableau de bord, vu en section transversale à travers le tableau de bord, depuis le pare-brise dans la direction de l'habitacle du véhicule, servant de région de paroi de tableau de bord recevant un choc éventuel de la tête,
avec un conduit d'amen d'amenée d'air (8) de diffusion vers les personnes, accouplé à un dispositif d'alimentation en air (7) pour apporter de l'air vers des buses de diffusion vers les personnes disposées dans la région de paroi du tableau de bord, le conduit d'amenée d'air (8) de diffusion vers les personnes étant recouvert par le tableau de bord,
avec un module d'airbag (17) qui présente au moins un airbag (18) et au moins un générateur de gaz qui sont reçus dans un boîtier d'airbag (19), le module d'airbag (17) étant recouvert, dans l'état monté, par le tableau de bord,
le conduit d'amenée d'air (8) de diffusion vers les personnes s'étendant dans la région du passager en dessous de la région de paroi du tableau de bord (4) recevant un choc éventuel de la tête, et s'étendant à cet endroit essentiellement dans la direction de l'axe transversal du véhicule, et
le module d'airbag (17), vu dans la région du passager dans la direction de l'axe longitudinal du véhicule, étant disposé dans un espace libre devant le canal d'amenée d'air (8) de diffusion vers les personnes et étant de ce fait disposé essentiellement en dehors de la région de paroi du tableau de bord recevant un choc éventuel de la tête, associée à la région avant de paroi du tableau de bord (4),
**caractérisé en ce que**
la région avant de paroi du tableau de bord (4) tournée vers le pare-brise (3) présente au moins par endroits des ouvertures de passage d'air (22) pour la ventilation diffuse de l'habitacle du véhicule (5), et
**en ce que** depuis le conduit d'amenée d'air (8) de diffusion vers les personnes, au moins un conduit latéral (26) est guidé dans la région en dessous des ouvertures de passage d'air (22).

2. Dispositif de ventilation selon la revendication 1, **caractérisé en ce que** le conduit d'amenée d'air (8) de diffusion vers les personnes est accouplé au dispositif d'alimentation en air dans une région du tableau de bord centrale (9), vue dans la direction de l'axe transversal du véhicule, et est guidé de là approximativement en ligne droite dans la direction de l'axe transversal du véhicule vers au moins une buse de diffusion vers les personnes située sur le bord.

3. Dispositif de ventilation selon la revendication 1 ou selon la revendication 2, **caractérisé en ce que** le conduit d'amenée d'air (8) de diffusion vers les personnes est réalisé intégralement avec le côté inférieur du tableau de bord ou est fixé de manière essentiellement étanche à l'air sur le côté inférieur du tableau de bord par une liaison par vissage et/ou par enclipsage et/ou par soudage.

4. Dispositif de ventilation selon l'une quelconque des revendications 1 à 3, **caractérisé en ce qu'**une région de paroi du côté inférieur du tableau de bord fait partie de la paroi de conduit d'amenée d'air de diffusion vers les personnes.

5. Dispositif de ventilation selon l'une quelconque des revendications 1 à 4, **caractérisé en ce que** l'au moins un conduit latéral (26) partant du conduit d'amenée d'air (8) de diffusion vers les personnes est guidé dans la région des ouvertures de passage d'air (22) dans la région avant de paroi du tableau de bord (4) de telle sorte que celle-ci ne recouvre pas par le haut le module d'airbag (17) disposé dans l'espace libre (15), vu dans la direction de l'axe longitudinal du véhicule, avant le conduit d'amenée d'air (8) de diffusion vers les personnes.

6. Dispositif de ventilation selon l'une quelconque des revendications 1 à 5, **caractérisé en ce qu'**au moins une buse de diffusion, qui est connectée à l'au moins un conduit latéral (26), est intégrée dans un corps de base porteur (20) de la région avant de paroi du tableau de bord (4).

7. Dispositif de ventilation selon la revendication 6, **caractérisé en ce que** le corps de base (20) est recouvert par le haut au moyen d'un recouvrement (21) qui est perforé de manière continue avec un modèle de perforation tel qu'une ventilation diffuse puisse être ajustée par le biais des perforations (22) sous la forme d'ouvertures de passage d'air dans la région de l'au moins une buse de diffusion.

8. Dispositif de ventilation selon l'une quelconque des revendications 1 à 7, **caractérisé en ce qu'**il est prévu un conduit d'air de dégivrage accouplé à un dispositif d'alimentation en air de dégivrage (12), qui s'étend sous la région avant de paroi de tableau de bord (4) le long de toute la région inférieure du bord du pare-brise, et **en ce que** des buses de dégivrage sont réalisées dans la région avant de paroi de tableau de bord (4) pour amener de l'air du conduit d'air de dégivrage (12) au pare-brise (3).

9. Dispositif de ventilation selon la revendication 8, **caractérisé en ce que** le conduit d'air de dégivrage (12) est guidé dans une région de bord vue dans la direction de l'axe transversal du véhicule, vu dans la direction de l'axe longitudinal du véhicule, depuis le pare-brise (3) vers l'arrière dans la région arrière de paroi de tableau de bord (6) du conduit d'amenée d'air (8) de diffusion pour les personnes pour le dégivrage des régions de vitres latérales par le biais de buses de dégivrage associées de manière correspondante, de sorte que dans la région entre le conduit d'amenée d'air (8) de diffusion pour les personnes et le conduit d'air de dégivrage (12), l'espace libre (15) servant d'espace de montage pour le module d'airbag (17) soit inclus au moins en partie.

10. Dispositif de ventilation selon l'une quelconque des revendications 1 à 9, **caractérisé en ce que** la région de paroi de tableau de bord recevant un choc éventuel de la tête (6) du tableau de bord (1) est fabriquée au moins en partie en un matériau absorbant l'énergie.

11. Dispositif de ventilation selon la revendication 10, **caractérisé en ce que** la région de paroi de tableau de bord recevant un choc éventuel de la tête (6) est fabriquée en un matériau déformable par absorption d'énergie, et
**en ce que** dans la région située en dessous de la région de paroi de tableau de bord recevant un choc éventuel de la tête (6) est réalisé un espace de déformation (29) de telle sorte que dans le cas d'un choc de la tête sur la région recevant un choc éventuel de la tête, cette région du tableau de bord (1) puisse se déformer sans difficulté par absorption d'énergie dans l'espace de déformation (29).

12. Dispositif de ventilation selon la revendication 10 ou selon la revendication 11, **caractérisé en ce que** la région de paroi de tableau de bord recevant un choc éventuel de la tête (6) est fabriquée essentiellement à partir d'une couche de support (28) en mousse absorbant l'énergie, revêtue de préférence d'une peau moulée par embouage (27).

13. Dispositif de ventilation selon l'une quelconque des revendications 1 à 12, **caractérisé en ce que** l'au moins un airbag (18), dans l'état de base replié non activé, est disposé derrière la région avant de paroi de tableau de bord (4) associée au pare-brise (3) sous la forme d'une région de paroi de sortie d'airbag du côté du tableau de bord,
**en ce que** l'ouverture de sortie de l'airbag (25) pouvant être réalisée dans la région avant de paroi de tableau de bord (4) présente une distance de sécurité prédéfinissable (35) par rapport à une région de choc éventuel de la tête d'un occupant du véhicule dans la région de paroi de tableau de bord recevant un choc éventuel de la tête (6) se raccordant depuis le pare-brise (3) dans la direction de l'habitacle du véhicule (5) à la région avant de paroi de tableau de bord (4) et **en ce que** la distance de sécurité (35) peut être prédéfinie de telle sorte que l'airbag (18), après une distance d'avance dans la direction de l'habitacle du véhicule (5) correspondant à la distance de sécurité (35) entre l'ouverture de sortie d'airbag (25) et la région recevant un choc éventuel de la tête, présente une pression de remplissage qui est réduite, en fonction de valeurs limites prédéfinissables en conséquence, par rapport à la pression de remplissage initiale dans l'airbag (18) au début de l'activation de l'airbag.

14. Dispositif de ventilation selon la revendication 13, **caractérisé en ce que** la distance de sécurité (35) est fixée de telle sorte que la pression de remplissage dans l'airbag (18), après une distance d'avance de l'airbag (18), corresponde, en fonction de la distance de sécurité (35) dans la région recevant un choc éventuel de la tête, au maximum à environ 15%, de préférence au maximum à environ 10% et plus préférablement au maximum à environ 5% de la pression de gaz initiale.

15. Dispositif de ventilation selon la revendication 13 ou la revendication 14, **caractérisé en ce que** la distance de sécurité (35), en fonction de la situation de collision particulière, est d'au moins approximativement 10 cm, de préférence d'au moins approximativement 15 cm, et plus préférablement d'au moins approximativement 20 cm.

16. Dispositif de ventilation selon l'une quelconque des revendications 13 à 15, **caractérisé en ce que** l'airbag (18) présente une pression de remplissage initiale comprise entre environ 30 bars et 35 bars et la pression de remplissage après une distance d'avance d'environ 100 mm vaut approximativement 2,5 à 3,5 bars, et de préférence après une distance d'avance d'environ 200 mm, approximativement 1,5 à 2,5 bars.

17. Dispositif de ventilation selon l'une quelconque des revendications 13 à 16, **caractérisé en ce que** la distance de sécurité (35), vue en section transversale à travers le tableau de bord (1), est approximativement la liaison rectiligne la plus courte entre le commencement, du côté de l'ouverture de sortie de l'airbag (25), de la région recevant un choc éventuel de la tête et le commencement, du côté de la région recevant un choc éventuel de la tête, de l'ouverture de sortie d'airbag (25).

18. Dispositif de ventilation selon l'une quelconque des revendications 1 à 17, **caractérisé en ce que** le boîtier d'airbag (19) est réalisé de telle sorte que l'au moins un airbag (18) qui y est reçu soit disposé, dans l'état de base monté, latéralement à côté de l'au moins un générateur de gaz, et/ou
**en ce que** dans la région de connexion entre une région de boîtier de générateur de gaz (31) recevant le générateur de gaz et une région de boîtier d'airbag (32) recevant l'airbag (18), soit prévu au moins un affaiblissement de matière et/ou une zone destinée à la rupture (33), qui se casse sous l'effet d'une force appliquée sur l'une des deux parties de boîtier (31), notamment sous l'effet d'une force appliquée sur la région du boîtier du générateur de gaz (31) pénétrant dans une région du tableau de bord (1) recevant un choc éventuel de la tête configurée au moins en partie de manière déformable, et empêche une venue en butée de la région déformable.
